# EUROPÄISCHE PATENTSCHRIFT

(11) **EP 2 125 141 B1**
(45) Veröffentlichungstag und Bekanntmachung des Hinweises auf die Patenterteilung: **27.05.2015**
(21) Anmeldenummer: 08707053.8
(22) Anmeldetag: 16.01.2008
(51) Int. Cl.: B01D 29/21, B01D 35/06

(54) **FILTERELEMENT ZUR ABREINIGUNG VON FLUIDEN**
FILTER ELEMENT FOR CLEANING FLUIDS
ÉLÉMENT FILTRANT DESTINÉ À LA PURIFICATION DE LIQUIDES

(30) Priorität: 30.01.2007 DE 102007004492
(43) Veröffentlichungstag der Anmeldung: 02.12.2009
(73) Patentinhaber: RT-Filtertechnik Gmbh, 88048 Friedrichshafen (DE)
(72) Erfinder: MÜLLER, Günther, 88682 Salem (DE); STEHLE, Gerhard, 78467 Konstanz (DE)
(74) Vertreter: Bartels, Martin Erich Arthur
(86) Internationale Anmeldenummer: PCT/EP2008/000267
(87) Internationale Veröffentlichungsnummer: WO 2008/092559

(56) Entgegenhaltungen:
- GB-A- 562 175
- GB-A- 675 420
- US-A- 1 425 366
- US-A- 4 705 626

## Beschreibung

Die Erfindung betrifft ein Filterelement zur Abreinigung von Fluiden und spezieller ein in einem Gehäuse oder einem Tank auswechselbar aufnehmbares Filterelement mit einem sich zwischen einer Fassung und einer Endkappe in Längsrichtung erstreckenden Mantelkörper, der einen inneren Filterhohlraum umgibt. Derartige Filterelemente, bei denen in der Fassung, die eine Elementaufnahme bildet, eine Einströmöffnung vorgesehen ist, über die das zu reinigende Fluid in den Einströmbereich des Filterhohlraumes einströmbar ist, sind in verschiedenen Ausführungsformen allgemein bekannt und handelsüblich. Beim Filtrationsvorgang strömt das Fluid vom Einströmbereich her durch das Filtermedium hindurch und gelangt durch Fluiddurchlässe des Mantelkörpers zur Außenseite des Filterelementes, die die Reinseite beim Filtrationsvorgang bildet.

Ein gattungsgemäßes Filterelement zur Abreinigung von Fluiden ist aus US 1,425,366 A bekannt geworden und weist auf:
einen einen Filterhohlraum umgebenden Mantelkörper mit Durchlässen für abgereinigtes Fluid;
eine den Mantelkörper am einen Ende abschließende Endkappe;
eine den Mantelkörper am anderen Ende abschließende Fassung mit mindestens einem Durchlass zum Einströmen des abzureinigenden Fluids in einen Einströmbereich innerhalb des Filterhohlraums;
ein sich zwischen Endkappe und Fassung erstreckendes Filtermedium, das vom Einströmbereich her von dem zu reinigenden Fluid durchströmbar ist, und
zumindest ein permanentmagnetisches Bauteil, das sich von der Innenseite der Fassung her in den Einströmbereich hinein erstreckt,
wobei als magnetisches Bauteil zumindest eine stabartige Magnetkerze vorgesehen ist, die sich von der Fassung weg entlang einer Längsrichtung des Filterelements in Richtung auf die Endkappe erstreckt,
wobei der Mantelkörper kreiszylinderförmig und die Fassung kreisrund sind, und wobei an dieser, auf einer Kreislinie liegend, die zum Mantelkörper konzentrisch ist, mehrere Magnetkerzen angeordnet sind,
wobei das Filtermedium eine kreiszylindrische Gestalt besitzt und mit seiner Außenseite an der Innenseite des Mantelkörpers anliegt, und wobei sich die Magnetkerzen in geringem Abstand entlang der Innenseite des Filtermediums erstrecken, und
wobei die Fassung als Aufnahme für die Magnetkerzen Sitze für ein endseitiges Sockelteil der Magnetkerzen aufweist.

Bei dem aus US 1,425,366 A bekannten Filterelement sind die Magnetkerzen gleicher oder unterschiedlicher Länge kreisförmig zwischen zwei konzentrisch angeordneten Gehäuseteilen angeordnet, wobei in den Gehäuseteilen Schlitze zum Durchfluss des zu reinigenden Fluids vorgesehen sind. Die Öffnungen in den Gehäuseteilen sind derart gewählt, dass das Fluid das von den Magnetkerzen erzeugte magnetische Feld durchströmt. Der Fluidstrom ist derart, dass zu reinigendes Fluid von einem zentralen, von der Magnetkerzenanordnung umschlossenen Innenraum die Magnetkerzenanordnung in radialer Richtung nach außen und weiter ein die Magnetkerzenanordnung kreisförmig umgebendes Filtermedium durchströmt.

Ein weiteres Filterelement, um metallische Partikel aus kontaminierten Fluiden, wie Öl, zu entfernen, ist aus GB 675,420 A bekannt geworden. Ein zentrales, mit Durchlässen versehenes Zuführrohr ist von einer zylindrischen Filterkammer umgeben, wobei die Filterkammer ein Filtermedium und Magnete enthält. Die Magnete sind spiralförmig ausgebildet und um das Zuführrohr angeordnet. Metallische Partikel werden von den Magneten ein- bzw. abgefangen und an einem tieferen Eintritt in die Filterkammer gehindert.

US 4,705,626 offenbart ein Filterelement mit einer in einem Hohlzylinder definierten Filterkammer. Die Filteranordnung umfasst eine zentral angeordnete, rohrförmige Hülse und mehrere ringförmige, um die Hülse angeordnete, in vertikaler Richtung voneinander beabstandete Permanentmagnete. Zwischen den Magneten angeordnete, nicht magnetische Abstandshalter weisen radial ausgerichtete Öffnungen und die Hülse entsprechende Schlitze auf, so dass ein Fluidaustausch zwischen dem Inneren der Hülse und der Filterkammer besteht. Die Filteranordnung umfasst weiter ein zweilagiges Filtermedium, welches die Magnetanordnung rohrzylinderförmig umgibt und nicht-metallische Partikel zurückhält.

Ein weiteres Filterelement, in welchem eine magnetische Abtrennung mit einer mechanischen Filtration verbunden ist, ist in GB 562,175 offenbart. Das unfiltrierte Öl wird zum Abscheiden magnetischer Partikel in Kontakt mit geeigneten magnetischen Oberflächen gebracht. Ein Permanentmagnet in Form eines Kolbens ragt in einen zylinderförmigen Filterraum. Ein im Querschnitt sternförmig gefaltetes Filtermedium umgibt den Permanentmagneten mantelartig. Das von magnetischen Partikeln befreite Fluid wird beim Durchtritt durch das Filtermedium weiter gereinigt.

Ausgehend von diesem Stand der Technik stellt sich die Erfindung die Aufgabe, ein Filterelement zur Verfügung zu stellen, das sich bei einfacher Bauweise durch eine besonders gute Filtrationswirkung auszeichnet, insbesondere bei einem Einsatz bei Anlagen oder Systemen mit Fluiden, die eine Partikelbelastung aufweisen.

Erfindungsgemäß ist diese Aufgabe durch ein Filterelement gelöst, das die Merkmale des Patentanspruches 1 in seiner Gesamtheit aufweist.

Gemäß dem Kennzeichen von Patentanspruch 1 ist die Anordnung so getroffen, dass die Fassung als Durchlass für das zu reinigende Fluid einen ringförmigen Durchbruch aufweist, der, zur Kreislinie der Anordnung der Magnetkerzen konzentrisch, den Umfangsbereich der Fassung von deren Zentralbereich trennt, und dass die Sitze der Magnetkerzen an Verbindungsteilen vorgesehen sind, die den Durchbruch in radialer Richtung überbrücken und Unterbrechungen des freien Durchlassquerschnittes bilden, dass ein inneres, zweites Filtermedium kreiszylindrischer Gestalt, das sich zwischen Fassung und Endkappe erstreckt, mit seiner Außenseite an den Einströmbereich und mit seiner Innenseite an ein fluiddurchlässiges inneres, zentrales Stützrohr angrenzt, aus dessen Innenraum gereinigtes Fluid über die Endkappe den Filterhohlraum verlässt, und dass sich die Magnetkerzen im Einströmbereich jeweils mittig in Längsrichtung entlang der Innenseite des äußeren Filtermediums und entlang der Außenseite des inneren Filtermediums in Richtung auf die Endkappe erstrecken.

Bei der erfindungsgemäßen Ausbildung als Kombi-Filterelement können Filtermedien unterschiedlicher Feinheit und/oder unterschiedlichen Aufbaues und/oder unterschiedlicher Filterfläche benutzt werden, je nach Einsatzbedingungen oder gegebenen Anforderungen.

Dadurch, dass sich gemäß dem Merkmal e) eine permanentmagnetische Einrichtung von der Fassung her in den Einströmbereich erstreckt, ist mit konstruktiv sehr einfachen Mitteln eine magnetische Vorfiltration erreicht. Trotz einfacher Bauweise ist daher eine besonders gute Reinigungswirkung des Filtrationsvorganges gewährleistet. Als magnetisches Bauteil ist zumindest eine stabartige Magnetkerze vorgesehen, die sich von der Fassung weg entlang einer Längsrichtung des Filterelementes in Richtung auf die Endkappe erstreckt. Dadurch dass sich das Magnetsystem hierbei über einen Längenbereich des Filterhohlraumes erstreckt, erfolgt die magnetische Vorfiltration mit besonders gutem Wirkungsgrad. Bei mehreren, vorzugsweise in regelmäßigen Winkelabständen voneinander angeordneten Magnetkerzen, ergibt sich eine besonders gute Vorfiltration.

Wenn bei derartigen Ausführungsbeispielen die Sicherung des jeweiligen Sockelteiles der Magnetkerzen im betreffenden Sitz lösbar ausgebildet ist, ergibt sich der besondere Vorteil, dass eine Herausnahme der Magnetkerzen aus dem Filterhohlraum ermöglicht ist.

Vorzugsweise ist das Sockelteil kreiszylindrisch und weist einen größeren Durchmesser auf als der von ihm getragene Magnetstab, wobei der Sitz der Fassung durch einen sich am Verbindungsteil ins Innere erstreckenden Rohrstutzen gebildet ist. Hierbei kann am Sockelteil eine Ringnut für ein Dichtelement ausgebildet sein, das gegen die Innenwand des Rohrstutzens abdichtet.

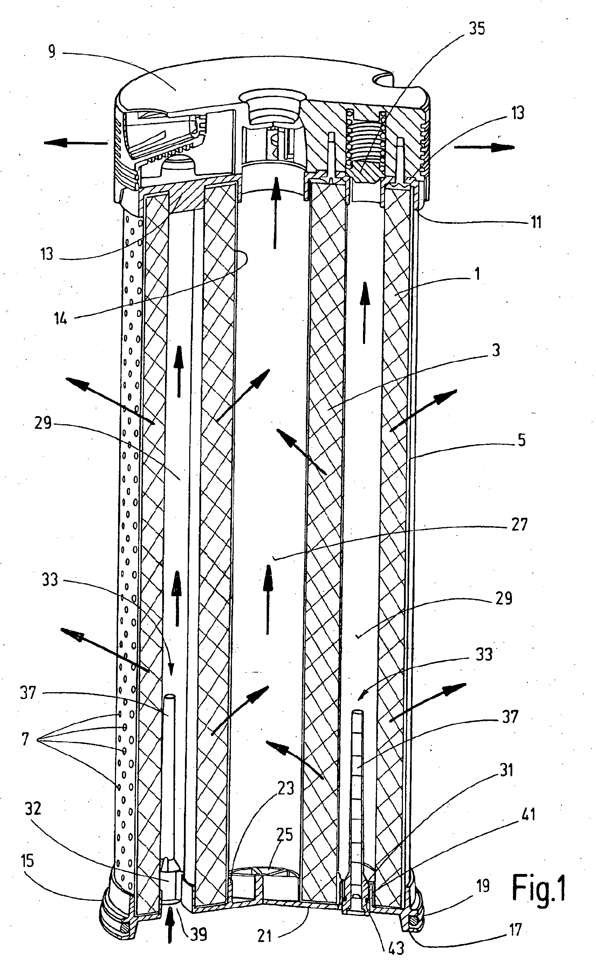

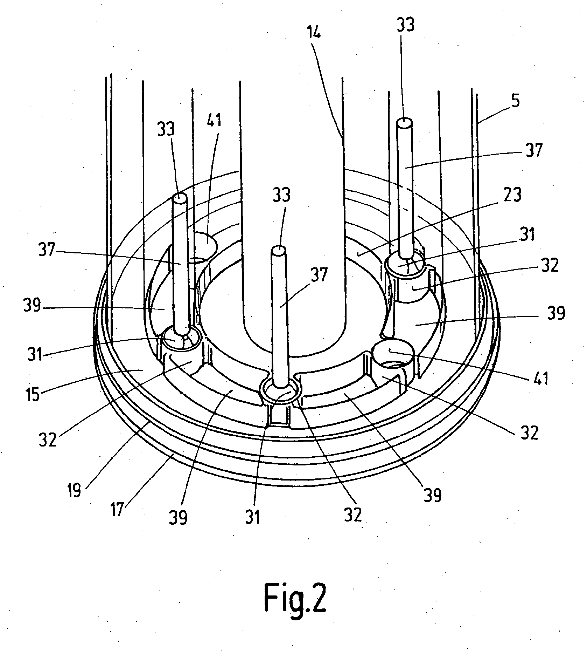

Nachstehend ist die Erfindung anhand eines in der Zeichnung dargestellten Ausführungsbeispieles im Einzelnen erläutert. Die Fig. 1 zeigt das mit abgewinkelter Schnittebene längs aufgeschnittene Ausführungsbeispiel des Filterelementes und Fig. 2 eine abgebrochen gezeichnete, perspektivische Schrägansicht nur des unteren, an die Fassung angrenzenden Bereiches des Ausführungsbeispieles, wobei Filtermedien nur andeutungsweise dargestellt sind.

Nachstehend ist die Erfindung anhand eines Ausführungsbeispieles erläutert, bei dem es sich um ein sogenanntes Kombi-Filterelement handelt, bei dem das abzureinigende Fluid gleichzeitig zwei Filtermedien durchströmt, nämlich ein erstes, äußeres Filtermedium 1 und ein zweites, inneres Filtermedium 3, bei denen es sich beim vorliegenden Ausführungsbeispiel jeweils um einen kreiszylinderförmigen Faltenbalg handelt, d. h. einen beispielsweise aus einem papierartigen Werkstoff plissierten Körper, gegebenenfalls mit Verstärkungen oder Einfassungen. Es versteht sich, dass als Filtermedien 1 und 3 auch andersartige Strukturen, beispielsweise Filtermatten oder dergleichen vorgesehen sein könnten. Das außen liegende erste Filtermedium 1 erstreckt sich mit seiner Außenseite anliegend an einem äußeren Stützzylinder 5, der, wie das Filtermedium 1 kreiszylinderförmig und mit Fluiddurchlässen 7 vorgesehen ist, die in der Figur nicht sämtlich beziffert sind. Der Stützzylinder 5 ist an seinem in der Figur oben liegenden Ende mit einer Endkappe 9 abgeschlossen, die mit ihrem Endrand 11 den Außenrandbereich des Stützzylinders 5 übergreift. Außerdem bildet die Endkappe 9 innere Einfassungen 13, die die zugewandten Endbereiche der Filtermedien 1 und 3 übergreifen und diese so positionieren, dass sich die Filtermedien 1 und 3 koaxial und im Abstand voneinander in Längsrichtung des Filterelementes erstrecken.

An dem der Endkappe 9 entgegengesetzten Ende ist das Filterelement durch eine kreisrunde Fassung 15 abgeschlossen, die beim vorliegenden Ausführungsbeispiel aus Kunststoff in Form einer Scheibe gestaltet ist und endseits einen radial vorstehenden, umfänglichen Ring 17 mit einer umfänglichen Ringnut aufweist, in der ein Dichtring 19 sitzt, der das Filterelement in einem Gehäuse oder Tank abdichtet. Die Fassung 15 bildet in ihrem Bodenteil 21 Einfassungen 23 für die Endrandbereiche der Filtermedien 1 und 3, entsprechend den Einfassungen 13 am Deckelteil 9, wobei ein innerer, fluiddurchlässiger Stützzylinder 14, an dem die Innenseite des inneren Filterelementes 3 anliegt, ebenfalls in der betreffenden Einfassung 13, 23 mit aufgenommen ist.

In ihrem Kreiszentrum weist die Fassung 15 einen Vorsprung 25 in Form eines zylindrischen Zapfens auf, der ins Innere des Filterhohlraumes 27 vorspringt und die innere Begrenzung der Einfassung 23 bildet, so dass der innere Stützzylinder 14 mit seiner Innenseite am Vorsprung 25 anliegt. Für das Einströmen des zu reinigenden Fluides in den Einströmbereich 29, der sich zwischen äußerem Filtermedium 1 und inneren Filtermedium 3 befindet, weist die Fassung 15 als Durchlass für das zu reinigende Fluid einen ringförmigen Durchbruch 39 auf, der sich, wie am besten aus Fig. 2 ersichtlich ist, zur Zylinderachse konzentrisch über das Ende des den Einströmbereich 29 bildenden Ringraumes erstreckt. Die in Radialrichtung gemessene Breite des Durchbruches 39 entspricht der radialen Weite des den Einströmbereich 29 bildenden Ringraumes. Wie ebenfalls aus Fig. 2 am deutlichsten zu ersehen ist, ist der Durchbruch 39 durch Verbindungsteile 32, die den Durchbruch in radialer Richtung überbrücken und Unterbrechungendes Durchbruches 39 bilden, in Teilabschnitte unterteilt, wobei die Verbindungsteile 32 in gleichen Winkelabständen voneinander angeordnet sind und beim vorliegenden Ausführungsbeispiel sechs Verbindungsteile 32 vorhanden sind. Jedes Verbindungsteil 32 bildet einen Sitz für ein Sockelteil 31 einer Magnetkerze 33, worauf unten noch näher eingegangen wird.

In der Endkappe 9 befindet sich in an sich bekannter Weise und in Fluidverbindung mit dem Einströmbereich 29 ein Bypassventil 35, das bei einer einen Schwellenwert übersteigenden Druckdifferenz an den Filtermedien 1 und 3 öffnet und über ein nicht näher gezeigtes Schutzsieb einen Austritt von Fluid ermöglicht.

Wie bereits erwähnt, weisen an der Fassung 15 angeordnete Magnetkerzen 33 ein kreiszylindrisches Sockelteil 31 auf, das einen Magnetstab 37 trägt, der einen kleineren Durchmesser als das Sockelteil 31 besitzt. Beim vorliegenden Ausführungsbeispiel sind sechs Magnetkerzen 33 in gleichen Winkelabständen voneinander vorgesehen, wobei sich die Magnetkerzen 33 im Einströmbereich 29 jeweils mittig in Längsrichtung entlang der Innenseite des Filtermediums 1 und entlang der Außenseite des Filtermediums 3 in Richtung auf die Endkappe 9 erstrecken.

Als Sitz für die Sockelteile 31 der Magnetkerzen 33 befindet sich in den Verbindungsteilen 32 jeweils ein ins Innere vorspringender Rohrstutzen 41, der den eigentlichen Sitz bildet, an dem das Sockelteil 31 umfangsseitig anliegt. Die Abdichtung des Sockelteiles 31 gegenüber dem Stutzen 41 bildet einen Dichtring 43 in einer Ringnut des Sockelteiles 31. Im Stutzen 41 ist das jeweilige Sockelteil 31 lösbar gesichert, etwa durch Verklipsen, eine bajonettartige Sicherung oder eine Verschraubung, was nicht im Einzelnen dargestellt ist. Die lösbare Sicherung ermöglicht es, Magnetkerzen 33, beispielsweise für Wartungs- oder Diagnosezwecke, separat auszubauen.

Vorzugsweise sind Fassung 15 und Stützzylinder 5 und 14 aus einem Kunststoffwerkstoff hergestellt. Wenn die Magnetkerzen 33 beim Elementwechsel zusammen mit dem Filterelement aus dem betreffenden System entnommen werden, besteht keine Gefahr eines Austretens von Schmutzpartikeln, da sich die Magnetkerzen 33 im Inneren der Schmutzkammer (Einströmbereich 29) befinden. Bei separater Entnahme der Magnetkerzen 33 aus dem Durchbruch 39 in der Fassung 15 heraus, besteht ebenfalls keine Verschmutzungsgefahr, da anhaftender Schmutz nur in die Schmutzkammer des Filterelementes abfallen kann. Hierbei können in vorteilhafter Weise die Magnetkerzen 33 getrennt entsorgt werden.

Der Magnetstab 37 kann aus einer Vielzahl an einzelnen übereinander angeordneten ringförmigen Permanentmagneten bestehen, die in eine Kunststoffumfassung der jeweiligen Magnetkerze 33 einlegbar sind. Die Kunststoffumfassung läßt sich über ein übliches Formgebungsverfahren, wie Spritzgießen oder dergleichen, erhalten, wobei die angesprochenen Permanentmagnete von Anfang an bündig umspritzt werden können; es besteht aber auch die Möglichkeit erst die Kunststoffumfassung herzustellen und dann die Magnete einzulegen. Anstelle des Einlegens der einzelnen Permanentmagnete könnte auch ein Magnetpulver in die Kunststofffassung als Ummantelung eingeschüttet werden. Eine Vielzahl weiterer Ausführungsformen sind hier denkbar.

## Patentansprüche

1. Filterelement zur Abreinigung von Fluiden, das aufweist:
a) einen einen Filterhohlraum umgebenden Mantelkörper (5) mit Durchlässen (7) für abgereinigtes Fluid;
b) eine den Mantelkörper (5) am einen Ende abschließende Endkappe (9);
c) eine den Mantelkörper (5) am anderen Ende abschließende Fassung (15) mit mindestens einem Durchlass (39) zum Einströmen des abzureinigenden Fluides in einen Einströmbereich (29) innerhalb des Filterhohlraumes;
d) ein sich zwischen Endkappe (9) und Fassung (15) erstreckendes Filtermedium (1), das vom Einströmbereich (29) her von dem zu reinigenden Fluid durchströmbar ist, und
e) zumindest ein permanentmagnetisches Bauteil (33), das sich von der Innenseite der Fassung (15) her in den Einströmbereich (29) hinein erstreckt,
- wobei als magnetisches Bauteil zumindest eine stabartige Magnetkerze (33) vorgesehen ist, die sich von der Fassung (15) weg entlang einer Längsrichtung des Filterelementes in Richtung auf die Endkappe (9) erstreckt,
- wobei der Mantelkörper (5) kreiszylinderförmig und die Fassung (15) kreisrund sind, und wobei an dieser, auf einer Kreislinie liegend, die zum Mantelkörper (5) konzentrisch ist, mehrere Magnetkerzen (33) angeordnet sind,
- wobei das Filtermedium (1) eine kreiszylindrische Gestalt besitzt und mit seiner Außenseite an der Innenseite des Mantelkörpers (5) anliegt, und wobei sich die Magnetkerzen (33) in geringem Abstand entlang der Innenseite des Filtermediums (1) erstrecken, und
- wobei die Fassung (15) als Aufnahme für die Magnetkerzen (33) Sitze für ein endseitiges Sockelteil (31) der Magnetkerzen (33) aufweist,
- **dadurch gekennzeichnet, dass** die Fassung (15) als Durchlass für das zu reinigende Fluid einen ringförmigen Durchbruch (39) aufweist, der, zur Kreislinie der Anordnung der Magnetkerzen (33) konzentrisch, den Umfangsbereich der Fassung (15) von deren Zentralbereich (25) trennt,
- dass die Sitze der Magnetkerzen (33) an Verbindungsteilen (32) vorgesehen sind, die den Durchbruch (39) in radialer Richtung überbrücken und Unterbrechungen des freien Durchlassquerschnittes bilden,
- dass ein inneres, zweites Filtermedium (3) kreiszylindrischer Gestalt, das sich zwischen Fassung (15) und Endkappe (9) erstreckt, mit seiner Außenseite an den Einströmbereich (29) und mit seiner Innenseite an ein fluiddurchlässiges inneres, zentrales Stützrohr angrenzt, aus dessen Innenraum (27) gereinigtes Fluid über die Endkappe (9) den Filterhohlraum verlässt,
- und
- dass sich die Magnetkerzen (33) im Einströmbereich (29) jeweils mittig in Längsrichtung entlang der Innenseite des äußeren Filtermediums (1) und entlang der Außenseite des inneren Filtermediums (3) in Richtung auf die Endkappe (9) erstrecken.

2. Filterelement nach Anspruch 1, **dadurch gekennzeichnet, dass** eine die Herausnahme der Magnetkerzen (33) aus dem Filterhohlraum ermöglichende lösbare Sicherung des jeweiligen Sockelteiles (31) der Magnetkerzen (33) im betreffenden Sitz vorgesehen ist.

3. Filterelement nach Anspruch 2, **dadurch gekennzeichnet, dass** das Sockelteil (31) kreiszylindrisch ist und einen größeren Durchmesser besitzt als der von ihm getragene Magnetstab (37) und dass der Sitz der Fassung (15) durch einen sich am Verbindungsteil (32) ins Innere erstreckenden Rohrstutzen (41) gebildet ist.

4. Filterelement nach Anspruch 3, **dadurch gekennzeichnet, dass** am Sockelteil (31) eine Ringnut für ein Dichtelement (43) ausgebildet ist, das gegen die Innenwand des Rohrstutzens (41) abdichtet.

## Claims

1. A filter element for cleaning fluids, comprising:
a) a jacket body (5) enclosing a filter cavity and with passages (7) for cleaned fluid;
b) an end cap (9) closing the jacket body (5) at one end;
c) a mounting (15) closing the jacket body (5) at the other end and with at least one passage (39) for the inlet of the fluid to be cleaned into an inlet region (29) within the filter cavity;
d) a filter medium (1) extending between the end cap (9) and the mounting (15) through which the fluid to be cleaned can flow from the inlet region (29), and
e) at least one permanent magnetic component (33) that extends from the inside of the mounting (15) into the inlet region (29),
- at least one rod-like magnetic core (33) being provided as a magnetic component, said magnetic core extending away from the mounting (15) along a longitudinal direction of the filter element towards the end cap (9),
- the jacket body (5) being in the form of a circular cylinder, and the mounting (15) being circular, and a number of magnetic cores (33) being arranged on said mounting, lying on a circular line that is concentric to the jacket body (5),
- the filter medium (1) being in the form of a circular cylinder, and resting with its outside against the inside of the jacket body (5), and the magnetic cores (33) extending a small distance apart along the inside of the filter medium (1), and
- the mounting (15) having seats for a base part (31) at the end of the magnetic cores (33) as a receptacle for the magnetic cores (33),
- **characterised in that** the mounting (15) has an annular opening (39) as a passage for the fluid to be cleaned, which opening, concentric to the circular line of the arrangement of the magnetic bores (33), separates the peripheral region of the mounting (15) from its central region (25),
- that the seats of the magnetic cores (33) are provided at connection parts (32) which bridge the opening (39) in a radial direction and form breaks in the free passage cross-section,
- that an inner, second filter medium (3), in the form of a circular cylinder and which extends between the mounting (15) and the end cap (9), borders the inflow region (29) with its outside and a fluid-permeable, inner, central supporting pipe with its inside, from the interior (27) of which supporting pipe cleaned fluid leaves the filter cavity via the end cap (9), and
- that the magnetic cores (33) in the inflow region (29) respectively extend centrally in a longitudinal direction along the inside of the outer filter medium (1) and along the outside of the inner filter medium (3) towards the end cap (9).

2. The filter element according to Claim 1, **characterised in that** a releaseable lock of the respective base part (31) of the magnetic cores (33) enabling the magnetic cores (33) to be removed from the filter cavity is provided in the respective seat.

3. The filter element according to Claim 2, **characterised in that** the base part (31) is circular cylindrical and has a larger diameter than the magnetic rod (37) supported by it, and that the seat of the mounting (15) is formed by a pipe socket (41) on the connection part (32) extending into the interior.

4. The filter element according to Claim 3, **characterised in that** an annular groove is formed on the base part (31) for a sealing element (43) that is sealed against the inner wall of the pipe socket (41).

## Revendications

1. Elément filtrant pour épurer des fluides, qui comprend :
a) une enveloppe (5) entourant une cavité et ayant des passages (7) pour du fluide épuré ;
b) une calotte (9) d'extrémité fermant l'enveloppe (5) à une extrémité ;
c) un support (15) fermant l'enveloppe (5) à l'autre extrémité et ayant au moins un passage (39) pour l'afflux du fluide à épurer dans une zone (29) d'afflux à l'intérieur de la cavité ;
d) un milieu (1) filtrant, qui s'étend entre la calotte (9) d'extrémité et le support (15) et qui peut être traversé, depuis la zone (29) d'afflux, par le fluide à épurer et
e) au moins un composant (33) à magnétisme permanent, qui s'étend depuis la face intérieure du support (15) dans la zone (29) d'afflux,
- dans lequel il est prévu, comme composant magnétique, au moins une bougie (33) magnétique de type en barreau, qui s'étend en s'éloignant du support (15), le long d'une direction longitudinale de l'élément filtrant, en direction de la calotte (9) d'extrémité,
- dans lequel l'enveloppe (5) est en forme de cylindre de section transversale circulaire et le support (15) est circulaire, et dans lequel, sur celui-ci, sont disposées, sur une ligne circulaire qui est concentrique à l'enveloppe (5), plusieurs bougies (33) magnétiques,
- dans lequel le milieu (1) filtrant a la forme d'un cylindre de section droite circulaire et s'applique, par sa face extérieure, à la face intérieure de l'enveloppe (5), et dans lequel les bougies (33) magnétiques s'étendent à une distance petite, le long de la face intérieure du milieu (1) filtrant et
- dans lequel le support (15) a, comme logement des bougies (33) magnétiques, des sièges, pour une partie (31) de culot du côté de l'extrémité des bougies (33) magnétiques,
- **caractérisé en ce que** le support (15) a, comme passage pour le fluide à épurer, une traversée (39) annulaire, qui, concentriquement, à la ligne circulaire de l'agencement des bougies (33) magnétiques, sépare la partie périphérique du support (15) de sa partie (25) centrale,
- **en ce que** les sièges des bougies (33) magnétiques sont prévues sur des parties (32) de liaison, qui recouvrent la traversée (39) dans la direction radiale et forment des interruptions de la section transversale libre de passage,
- **en ce qu'**un deuxième milieu (3) filtrant intérieur, en forme de cylindre à section transversale circulaire et s'étendant entre le support (15) et la calotte (9) d'extrémité, est voisin, par sa face extérieure, de la zone (29) d'afflux et, par sa face intérieure, d'un tube central d'appui intérieur, perméable au fluide, de l'intérieur (27) duquel du fluide épuré quitte la cavité du filtre, par la calotte (9) d'extrémité et
- **en ce que** les bougies (33) magnétiques s'étendent dans la zone (29) d'afflux, respectivement au milieu dans la direction longitudinale, le long de la face intérieure du milieu (1) filtrant extérieur et le long de la face extérieure du milieu (3) filtrant intérieur en direction de la calotte (9) d'extrémité.

2. Elément filtrant suivant la revendication 1, **caractérisé en ce qu'**il est prévu, dans le siège concerné, une fixation amovible de la partie (31) respective de culot des bougies (33) magnétiques, permettant de retirer les bougies (33) magnétiques de la cavité du filtre.

3. Elément filtrant suivant la revendication 2, **caractérisé en ce que** la partie (31) de culot est cylindrique de section transversale circulaire et a un diamètre plus grand que le barreau (37) magnétique qu'elle porte et **en ce que** le siège du support (15) est formé par une tubulure (41) s'étendant à l'intérieur à la partie (32) de liaison.

4. Elément filtrant suivant la revendication 3, **caractérisé en ce qu'**il est constitué à la partie (31) de culot une rainure annulaire pour un élément (43) d'étanchéité, qui assure l'étanchéité, par rapport à la paroi intérieure de la tubulure (41).
